# EUROPEAN PATENT SPECIFICATION

(11) **EP 2 963 784 B1**
(45) Date of publication and mention of the grant of the patent: **10.10.2018**
(21) Application number: 14757362.0
(22) Date of filing: 27.01.2014
(51) Int. Cl.: H02K 29/08, H02K 5/18, H02K 11/215, H02K 7/18, H02K 9/06

(54) **STRUCTURE FOR INSTALLING SENSOR IN ENGINE UNIT**
STRUKTUR ZUR MONTAGE EINES SENSORS IN EINER MOTOREINHEIT
STRUCTURE D'INSTALLATION DE CAPTEUR POUR GROUPE MOTEUR

(30) Priority: 28.02.2013 JP 2013039617
(43) Date of publication of application: 06.01.2016
(73) Proprietor: Honda Motor Co., Ltd., Minato-ku Tokyo 107-8556 (JP)
(72) Inventor: ABE Norio, Wako-shi Saitama 351-0193 (JP); YAMASHITA Akihiko, Wako-shi Saitama 351-0193 (JP); MAKABE Tomoya, Wako-shi Saitama 351-0193 (JP); HIRAMATSU Akito, Wako-shi Saitama 351-0193 (JP)
(74) Representative: Beder, Jens
(86) International application number: PCT/JP2014/051660
(87) International publication number: WO 2014/132719

(56) References cited:
- EP-A1- 1 233 175
- JP-A- H0 438 149
- JP-A- 2010 200 421
- JP-A- 2011 149 277
- JP-A- 2013 027 252
- JP-B2- 4 020 275
- JP-U- H0 578 175

## Description

### TECHNICAL FIELD

The present invention relates to an engine unit sensor installation structure in which a position detection sensor used to detect a rotational position of a rotor of a rotary electric machine is provided at a position adjacent to a crankcase.

Priority is claimed on Japanese Patent Application No. 2013-39617 filed on February 28, 2013, the contents of which are incorporated herein by reference.

### BACKGROUND

As the engine unit of a motorcycle or the like, an engine unit is known that uses a rotary electric machine for AC power generation provided on one end in an axis direction of a crankshaft as a start motor used for the engine start.

When a rotary electric machine for AC power generation is used for this kind of application, it is necessary to perform, at an appropriate timing, energization of coils of a U-phase magnetic pole, a V-phase magnetic pole, and a W-phase magnetic pole on the stator side in accordance with a movement position of a permanent magnet on a rotor in order to smoothly drive the rotary electric machine. Therefore, in the rotary electric machine used for this kind of application, a position detection sensor used to detect a rotational position of the rotor is provided (for example, refer to Japanese Unexamined Patent Application, First Publication No. 2010-200421).

In the rotary electric machine disclosed in Japanese Unexamined Patent Application, First Publication No. 2010-200421, permanent magnets are attached on the inner circumferential surface of a rotor having a cylindrical shape with a bottom, the rotor being connected to an end portion of a crankshaft such that different magnetic pole faces alternately appear along the circumferential direction, and a stator is provided on an non-rotating part inside of the rotor such that the magnetic pole is opposed to a permanent magnet of the rotor. The stator of the rotary electric machine includes a plurality of teeth radially extending, and coils of three phases are each wound around predetermined one of the teeth. Further, in the rotary electric machine, a Hall IC unit as a sensor that detects the change of magnetic flux is attached close to a tip portion of each of U-phase, V-phase, and W-phase magnetic poles (teeth), and the position of the magnet, that is, the rotational position of the rotor is detected based on a signal output from the Hall IC unit. Note that, the Hall IC unit is configured such that a Hall IC element is buried in a resin.

Further, in the case of the rotary electric machine disclosed in Japanese Unexamined Patent Application, First Publication No. 2010-200421, the rotor having a cylindrical shape with a bottom is attached to the end portion of the crankshaft such that the opening of the rotor is directed toward the crankcase, and the stator and the Hall IC unit provided on the stator are attached to the outer lateral surface of a wall portion of the crankcase. An engine cover attached to the wall portion of the crankcase covers the outside of the stator and rotor.

Besides, EP 1 233 175 A1 discloses an engine unit sensor installation structure according to the preamble of claim 1, except: i) an air guiding member for forced cooling used to introduce a cooling air to a space between the partition wall and the bottom wall of the rotor is provided between the partition wall and the rotor, and ii) the air guiding member is a rotary vane provided on the bottom wall of the rotor. JP H04 38149 A further discloses providing blades on the rotor for cooling the electrical machine. Moreover, JP H05 78175 U, JP 4 020 275 B and JP 2013 027 252 disclose several features of the dependent claims.

### [Related Art Documents]

### [Patent Documents]

### SUMMARY OF INVENTION

### PROBLEMS TO BE SOLVED BY THE INVENTION

However, in the engine unit provided with the above rotary electric machine, since the Hall IC unit with the stator is attached to the wall portion of the crankcase which becomes a high temperature when the engine is driven, in a case where the cooling efficiency of the engine body of a water-cooling engine or the like is not high (or in a case where the sensor is not a valuable one having a high cooling efficiency), the cooling manner becomes a problem.

An object of an aspect of the present invention is to provide an engine unit sensor installation structure capable of enhancing the cooling performance of an installation part of a Hall IC unit and stably detecting a rotational position by the Hall IC unit even in a case where a high cooling efficiency of the engine body is not expected.

### MEANS FOR SOLVING THE PROBLEM

An engine unit sensor installation structure according to an aspect of the present invention employs the following configurations in order to achieve the aforementioned object.
(1) An engine unit sensor installation structure according to an aspect of the present invention includes: a crankcase including a crank chamber that houses a crankshaft, and an opening through which an end portion of the crankshaft protrudes; a rotary electric machine including a rotor having a cylindrical shape with a bottom, the rotor being attached to the end portion of the crankshaft protruding through the opening, and a stator attached to an non-rotating part close to the rotor; a position detection sensor configured to detect a rotational position of the rotor; an engine cover attached to a wall portion having the opening of the crankcase and covering the end portion of the crankshaft and the outside of the rotary electric machine; a permanent magnet in which the position detection sensor is provided on the rotor; and a Hall IC unit configured to detect the change of magnetic flux in accordance with a rotational position of the permanent magnet on the rotor, wherein: a partition wall that separates the crank chamber from an inner space of the engine cover is provided on the opening of the crankcase; the rotor is attached to the end portion of the crankshaft such that a bottom wall is located on the crankcase side; the stator of the rotary electric machine and the Hall IC unit of the position detection sensor are attached to the engine cover; and an air guiding member for forced cooling used to introduce a cooling air to a space between the partition wall and the bottom wall of the rotor is provided between the partition wall and the rotor; the air guiding member is a rotary vane provided on the bottom wall of the rotor; a flow adjusting vane configured to adjust a flow of a cooling air that is sent from the rotary vane is provided in a protruding manner on a surface that faces the bottom wall of the rotor of the partition wall.

Thereby, the partition wall separates the crank chamber and the inner space of the engine cover, and a flow of a high-temperature lubrication oil that flows in the crankcase into the engine cover is regulated. Further, since the stator and the Hall IC unit are attached to the engine cover that is exposed to an outside air and is easily cooled, the temperature increase is suppressed. Further, a forced cooling air is introduced by the air guiding member into a space part between the partition wall and the bottom wall of the rotor, and the peripheral part of the partition wall that faces the inside of the engine cover is cooled by the forced cooling air. As a result, it is difficult to transfer heat from the crankcase to the Hall IC unit.
(1) In the aspect of the above (1), as already mentioned, the air guiding member is a rotary vane provided on the bottom wall of the rotor.
(2) In the aspect of the above (1), the air guiding member may be a rotary vane integrally attached to the crankshaft.
(1) In the aspect of the above (2), as already mentioned, a flow adjusting vane configured to adjust a flow of a cooling air that is sent from the rotary vane is provided in a protruding manner on a surface that faces the bottom wall of the rotor of the partition wall.
   Thereby, it becomes possible to efficiently flow the cooling air on the front surface side of the partition wall by the cooperation of the rotary vane and the flow adjusting vane.
(3) In the aspect of any one of the above (1) to (2), the Hall IC unit may be provided at a position facing the inside of an opening of the rotor in the engine cover, the engine cover may be provided with an air guiding duct that directs frontward of a vehicle body and that introduces a traveling wind in a direction that is opposed to the end portion in an axis direction of the crankshaft in the engine cover, and a discharge port through which the traveling wind introduced into the engine cover through the air guiding duct is discharged from the rear of the crankshaft to the outside of the engine cover, and a penetrating hole through which part of the traveling wind introduced through the air guiding duct is introduced to the partition wall side may be provided on the bottom wall of the rotor.
   Thereby, when the vehicle is traveling, a traveling wind is introduced in the direction that is opposed to the crankshaft in the engine cover through the air guiding duct, part of the traveling wind directly flows in a partition wall direction through the penetrating hole of the bottom wall of the rotor, and the rest of the traveling wind changes direction at the bottom wall of the rotor and flows in the circumferential direction of the Hall IC unit. The traveling wind that flows in the partition wall direction through the penetrating hole cools the partition wall, and then is discharged to the outside of the engine cover through the discharge port. Further, the traveling wind that flows in the circumferential area of the Hall IC unit cools the Hall IC unit, and then flows around to the outside of a circumferential wall of the rotor and is discharged to the outside of the engine cover through the discharge port.
(4) In the aspect of any one of the above (1) to (3), the permanent magnet may be provided on the rotor such that a magnetization direction is directed along a radial direction of the rotor, and the Hall IC unit may be attached to the engine cover such that a magnetic flux detection direction is directed along the radial direction of the rotor.
(5) In the aspect of any one of the above (1) to (4), the permanent magnet provided on the rotor may be magnetized such that different magnetic pole faces alternately appear along a circumferential direction of the rotor and may be a permanent magnet of which magnetic flux enters into and exits from U-phase, V-phase, and W-phase magnetic poles of the stator when functioning as the rotary electric machine, and the Hall IC unit may include a Hall IC element configured to detect the change of magnetic flux of the U-phase, V-phase, and W-phase magnetic poles.
   Thereby, the timing when the permanent magnet on the rotor side passes near each of the U-phase, V-phase, and W-phase magnetic poles is detected by the Hall IC element of the Hall IC unit.
(6) In the aspect of the above (5), a protrusion for use in ignition timing detection of the engine may be provided on an outer circumferential surface of the rotor, and a pickup sensor may be provided at a position that faces a path of the protrusion in the engine cover.
   Thereby, the ignition timing of the engine is detected based on a detection signal of the pickup sensor, and also it becomes possible to detect the rotational angle of the crankshaft by combining the detection signal of the pickup sensor and a detection signal of each Hall IC element.
(7) In the aspect of any one of the above (1) to (6), the partition wall may be formed of a resin material.

Thereby, the partition wall cuts off a heat that will be transmitted to the engine cover from the crankcase. Further, it becomes easy to form an air guiding part on the partition wall.

### ADVANTAGE OF THE INVENTION

According to an aspect of the present invention, since it is possible to regulate the flow of a high-temperature lubrication oil in the crank chamber into the engine cover by the partition wall, the Hall IC unit is attached to the engine cover that does not easily become high temperatures, and the peripheral part of the partition wall is efficiently cooled by the forced cooling air, it is possible to enhance the cooling performance of the installation part of the Hall IC unit. Accordingly, it is possible to stably detect a rotational position by the Hall IC unit even in a case where a high cooling efficiency of the engine body is not expected.

### BRIEF DESCRIPTION OF THE DRAWINGS

FIG. 1 is a lateral view of a motorcycle according to an embodiment of the present invention.
FIG. 2 is a cross sectional view corresponding to an A-A cross section of FIG. 1 of an engine unit according to a first embodiment of the present invention.
FIG. 3 is a cross sectional view in which part of FIG. 2 is enlarged.
FIG. 4 is a schematic lateral view showing a positional relationship of a stator and a Hall IC unit according to the first embodiment of the present invention.
FIG. 5 is a schematic front view showing a positional relationship of the stator and the Hall IC unit according to the first embodiment of the present invention.
FIG. 6 is a front view of a partition wall according to the first embodiment of the present invention.
FIG. 7 is a partially enlarged view of a cross section corresponding to FIG. 3 according to a second embodiment of the present invention.
FIG. 8 is a cross sectional view corresponding to FIG. 3 according to a third embodiment of the present invention.
FIG. 9 is a diagram in which an inner circumferential surface of a rotor is expanded and is schematically shown according to a fourth embodiment of the present invention.
FIG. 10 is an enlarged view of the cross section corresponding to FIG. 3 according to the fourth embodiment of the present invention.
FIG. 11 is a schematic front view showing a positional relationship of a stator and a Hall IC unit according to the fourth embodiment of the present invention.

### DESCRIPTION OF THE EMBODIMENTS

Hereinafter, embodiments of the present invention will be described with reference to the drawings. Note that, in the drawings, an arrow FR indicates the front of a vehicle, an arrow UP indicates the upside of the vehicle, and an arrow LF indicates the left side of the vehicle. Further, in the embodiments described below, the same reference numerals are given to a common unit, and the overlapping description is omitted.

### (Vehicle Configuration)

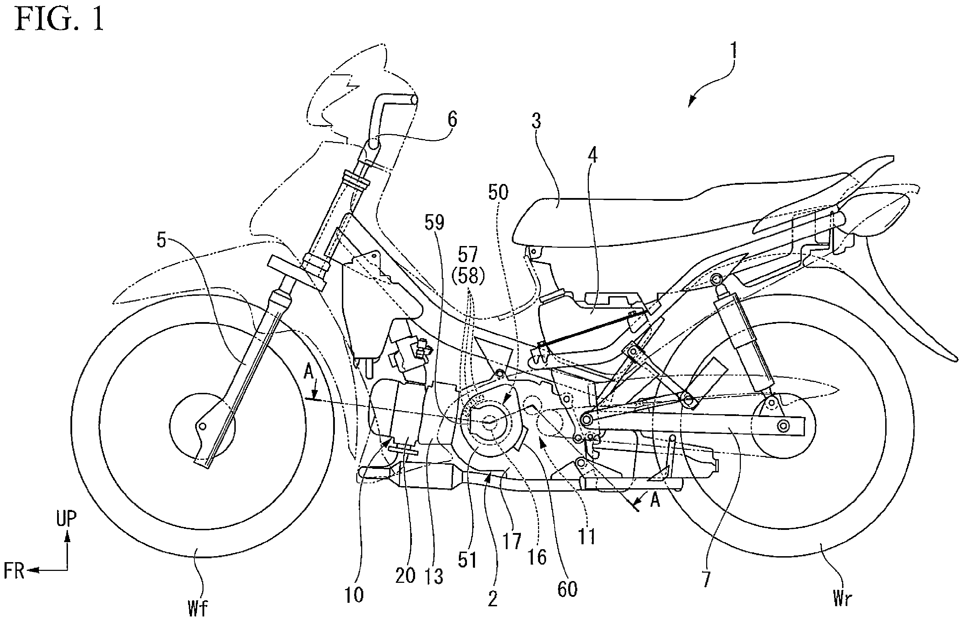

FIG. 1 is a view showing the lateral side of a motorcycle 1 provided with an engine unit 2.

In the motorcycle 1, the engine unit 2 is provided at the center in the vehicle body front and rear direction, a seat 3 on which an occupant is seated is provided upper rearward of the engine unit 2, and a fuel tank 4 is provided below the seat 3.

A front wheel Wf is supported rotatably by a front fork 5, and a steering handle 6 is provided upward of the front fork 5. A rear wheel Wr is supported swingably by a vehicle body frame via a swing arm 7.

### (Engine Unit)

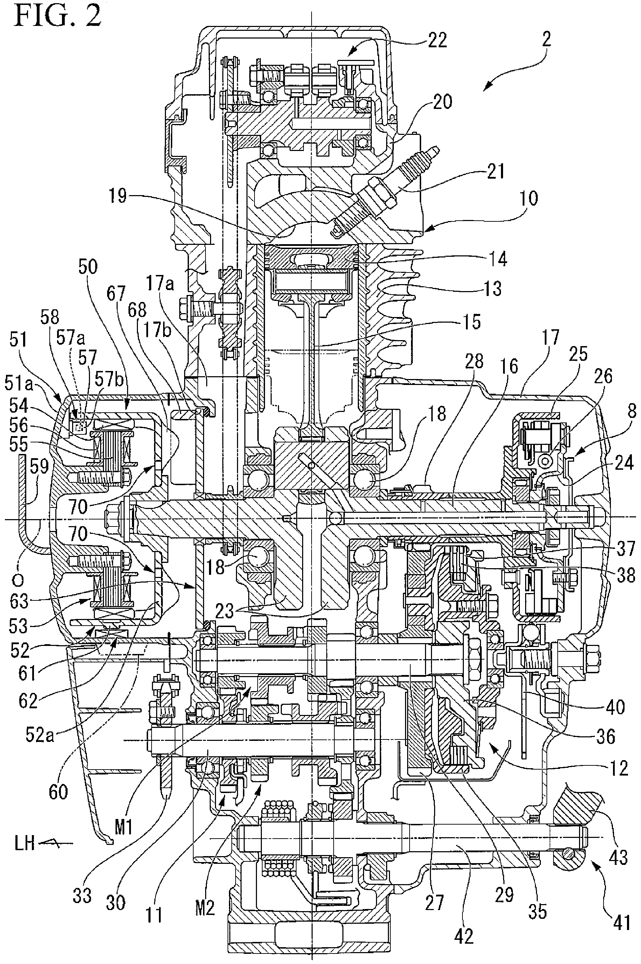

FIG. 2 is a cross sectional view of the engine unit 2 corresponding to an A-A cross section of FIG. 1.

The engine unit 2 is configured as an integrated block of a multistep transmission 11 and a reciprocating engine 10 as an internal combustion engine, and transmission of power between the engine 10 and the transmission 11 is available via a centrifugal clutch 8 and a transmission clutch 12.

In the engine 10, a piston 14 is slidably fitted into a cylinder bore of a cylinder block 13, and the piston 14 is connected to the crankshaft 16 via a con rod 15. In the engine 10, as shown in FIG. 1, the cylinder block 13 is provided on a vehicle in a substantially horizontal attitude extending frontward of the vehicle body with respect to the crankshaft 16. The crankshaft 16 is supported rotatably via a shaft bearing 18 to a crankcase 17 integrally connected to one end portion (rear end portion) of the cylinder block 13. Further, a cylinder head 20 that forms a combustion chamber 19 with the piston 14 is attached to the other end portion (front end portion) of the cylinder block 13.

As shown in FIG. 2, an ignition device 21 is provided on the cylinder head 20 so as to face the inside of the combustion chamber 19. A valve moving device 22 is provided on an end portion of the cylinder head 20. The valve moving device 22 performs open and close driving of intake and exhaust valves (not shown) in cooperation with the crankshaft 16. A crank web 23 is provided on both sides in an axis direction of a connection portion (crank pin) with the con rod 15 on the crankshaft 16. A crank chamber 17a in the crankcase 17 houses substantially the whole area of the crankshaft 16.

The centrifugal clutch 8 is provided on the outer circumference of one end portion (end portion on the right side of FIG. 2) in an axis direction of the crankshaft 16. The centrifugal clutch 8 includes a clutch inner 24 integrally fixed to the one end portion of the crankshaft 16, a clutch outer 25 rotatably supported on the outer circumference on the one end side of the crankshaft 16, and a centrifugal weight 26 that rotates integrally with the clutch inner 24 and makes the clutch inner 24 and the clutch outer 25 be in a connecting state by a centrifugal force. The centrifugal clutch 8 outputs a rotational power of the crankshaft 16 to the clutch outer 25 when the rotational speed of the crankshaft 16 reaches a predetermined speed or more.

Further, an output gear 28 that engages with an input gear 27 of the transmission clutch 12 is connected integrally rotatably to the clutch outer 25.

A main shaft 29 and a counter shaft 30 of the transmission 11 are provided in parallel with the crankshaft 16 at a vehicle rearward position of a rotation center O of the crankshaft 16 in the crankcase 17. The main shaft 29 and the counter shaft 30 are each rotatably supported in the crankcase 17 via a shaft bearing (reference numeral is omitted). The main shaft 29 is provided at a position adjacent to the vehicle rear of the crankshaft 16. The counter shaft 30 is provided at a position adjacent to the vehicle rear of the main shaft 29.

Amain transmission gear group M1 is provided on the main shaft 29 of the transmission 11. A counter gear group M2 that engages with the main transmission gear group M1 is provided on the counter shaft 30 of the transmission 11. The input gear 27 and the transmission clutch 12 each engaging with the output gear 28 on the crankshaft 16 side are provided on one end portion in an axis direction of the main shaft 29. The input gear 27 is rotatably supported on the outer circumference of the main shaft 29. Further, an output sprocket 33 is attached to another end portion in an axis direction of the counter shaft 30. A chain (not shown) used for power transmission is hung on the output sprocket 33. The rotation of the counter shaft 30 is transmitted via the chain to the rear wheel Wr as a drive wheel.

In the transmission 11, drive transmission gears of the main transmission gear group M1 and the counter gear group M2 are selected by a rotational operation of a shift drum (not shown) provided in the crankcase 17, and thereby an arbitrary transmission gear step (gear position) including a neutral position is set.

The transmission clutch 12 includes a clutch outer 35 having a cylindrical shape with a bottom rotatably supported on the main shaft 29 in a state where the clutch outer 35 is integrally connected to the input gear 27, a clutch inner 36 having a substantially discoid shape connected by spline engagement to the main shaft 29, a plurality of drive friction plates 37 integrally rotatably caught by the clutch outer 35, a plurality of following friction plates 38 that are integrally rotatably caught by the clutch inner 36 and frictionally come into contact with the drive friction plate 37, a clutch spring (not shown) that biases the drive friction plate 37 and the following friction plate 38 in a compressive contact direction, and an operation plate 40 that performs a release operation of the biasing force of a clutch spring that acts between the drive friction plate 37 and the following friction plate 38.

The drive friction plates 37 of the clutch outer 35 and the following friction plates 38 of the clutch inner 36 are arranged alternately in an axis direction, realize power transmission between the clutch outer 35 and the clutch inner 36 by being pressed to each other in response to the biasing force of the clutch spring, and cut off power transmission between the clutch outer 35 and the clutch inner 36 by a release operation of the biasing force of the clutch spring by the operation plate 40.

Further, forward and backward operations in an axis direction are made on the operation plate 40 in cooperation with a shift pedal (not shown), the operation plate 40 releases the biasing force of the clutch spring that acts between the drive friction plate 37 and the following friction plate 38 when the shift pedal is operated by a driver, and thereby power transmission between the clutch outer 35 and the clutch inner 36 is cut off.

Further, a kick spindle 42 of a kick starter 41 is rotatably attached to the rearward lower portion of the crankcase 17. The kick spindle 42 transmits the rotation to the crankshaft 16 only when a kick pedal 43 is kicked down.

Another end portion in the axis direction of the crankshaft 16 protrudes outwardly of the crankcase 17 through an opening 17b having a circular shape formed on a lateral wall (wall portion) of the crankcase 17. A rotary electric machine (hereinafter, referred to as "ACG starter 50□) having a function as an AC generator and a function as a start motor of the engine 10 is provided on another end side of the crankshaft 16 that protrudes from the opening 17b of the crankcase 17. An engine cover 51 having a recess shape that is attached by bolt fastening or the like to the lateral wall of the crankcase 17 covers another end of the crankshaft 16, and the front surface side and the circumferential area of the ACG starter 50.

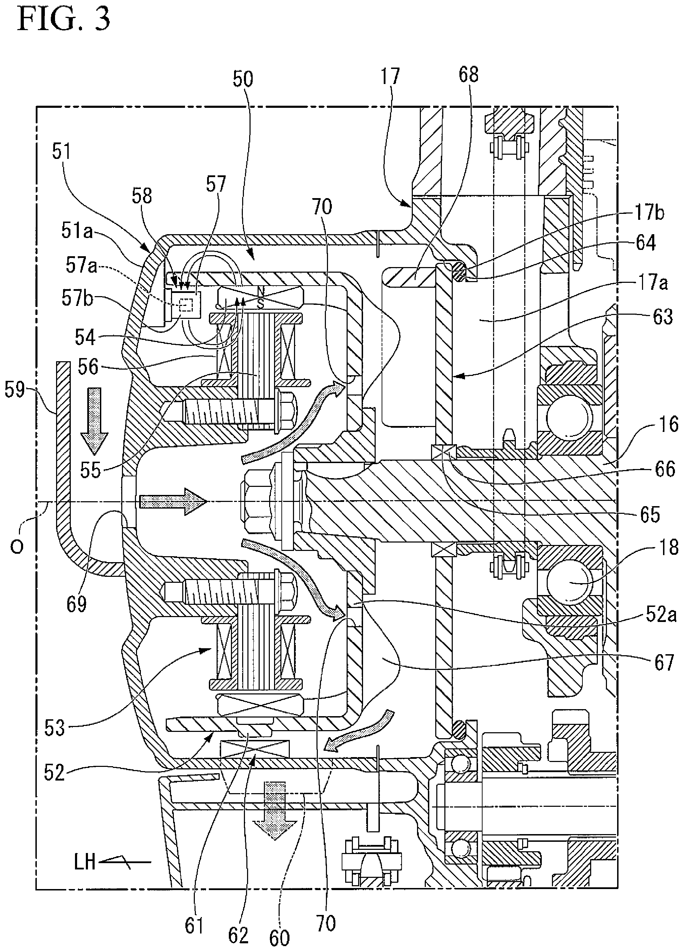

FIG. 3 is an enlarged view showing an installation part of the ACG starter 50 of FIG. 2.

The ACG starter 50 includes a rotor 52 having a cylindrical shape with a bottom that is attached to an end portion of the crankshaft 16 and a stator 53 provided on the inner circumferential side of the rotor 52. The rotor 52 is fixed to the crankshaft 16 such that a bottom wall 52a is located on the lateral wall side of the crankcase 17. The stator 53 is fixed by bolt fastening or the like to the inner lateral surface of a bottom wall 51a of the engine cover 51.

Permanent magnets 54 are attached on the inner circumferential surface of the rotor 52 such that different magnetic pole faces (N-pole face and S-pole face) that direct in a shaft center direction of the rotor 52 alternately appear along the circumferential direction. The permanent magnets 54 are arranged on the inner circumferential side of the rotor 52 such that a magnetization direction is directed along a radial direction of the rotor 52. In the present embodiment, the permanent magnet 54 is a magnet in which a plurality of magnet pieces each having a strip shape is attached to the inner circumferential surface of the rotor 52; however, the permanent magnet 54 may be a ferromagnetic having a cylindrical shape magnetized such that different magnetic pole faces alternately appear along the circumferential direction.

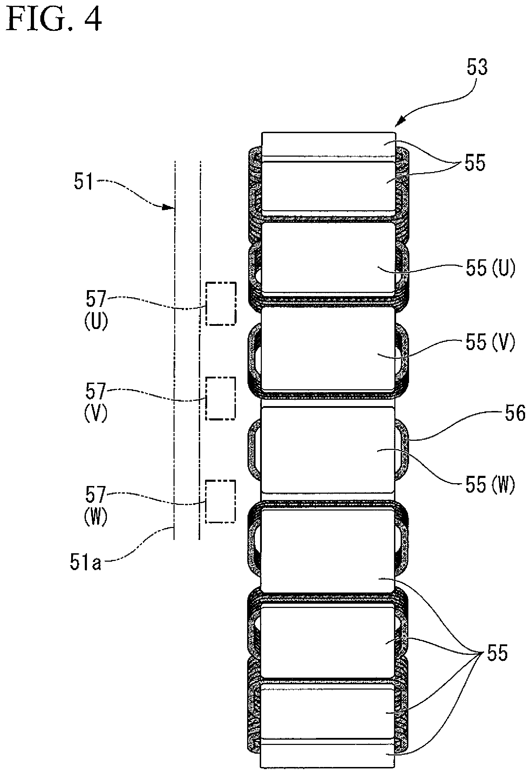

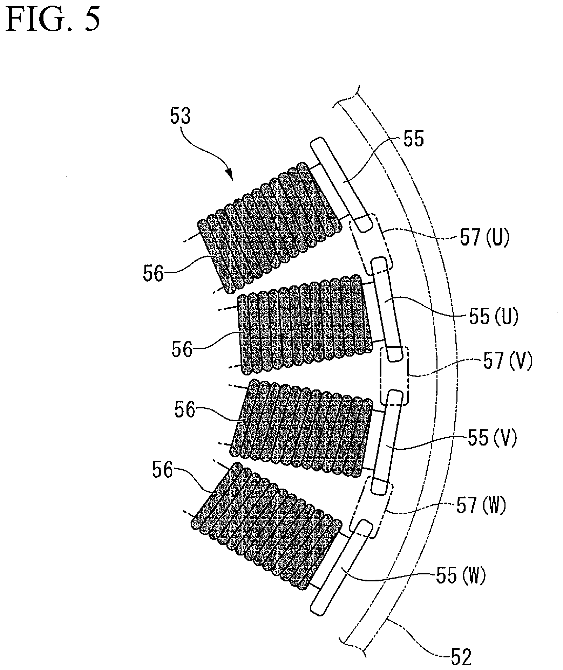

FIG. 4 is a view in which the stator 53 is seen from a direction perpendicular to the shaft center of the rotor 52. FIG. 5 is a view in which the stator 53 is seen from a direction along the shaft center of the rotor 52.

As shown in these drawings, the stator 53 includes a plurality of teeth 55 each protruding in a radial direction, and one of U-phase, V-phase, and W-phase coils 56 is wound around each of the teeth 55. The front end surface of each of the teeth 55 is configured to face the magnetic pole face of the permanent magnet 54 on the inner circumference of the rotor 52 with a micro gap.

A Hall IC unit 57 that detects the change of magnetic flux in accordance with the movement of the permanent magnet 54 is attached to a position that faces from the lateral side (from a direction along the axis direction) the rotational path of the permanent magnet 54, of the inner lateral surface of the bottom wall 51a of the engine cover 51. As shown in FIG. 4 and FIG. 5, one of the Hall IC units 57 is provided at a position adjacent to each of the U-phase, V-phase, and W-phase magnetic poles (teeth 55) of the stator 53. As shown in FIG. 3, each of the Hall IC units 57 has a configuration in which a Hall IC element 57a is buried inside of a resin 57b.

Note that, in the present embodiment, one of the Hall IC elements 57a that corresponds to the resin 57b of one package of each of the Hall IC units 57 is buried; however, three Hall IC elements 57a each used for one of U-phase, V-phase, and W-phase may be buried in the resin 57b as one package.

Further, each of the Hall IC units 57 is attached to the bottom wall 51a of the engine cover 51 such that a magnetic flux detection direction is directed along the radial direction of the rotor 52. As shown in FIG. 3, the Hall IC unit 57 attached to the bottom wall 51a in this way faces the inner circumferential surface of the end edge of the rotor 52 where the permanent magnet 54 is not provided. Each of the Hall IC units 57 is provided at a position that faces the inside of the opening of the rotor 52 in the engine cover 51.

The Hall IC units 57 with the permanent magnets 54 on the rotor 52 configure a position detection sensor 58 used to detect a rotational position of the rotor 52. A signal detected by the position detection sensor 58 is output to a current control device (not shown) of the ACG starter 50 and is used to control energization (control a commutation timing) of the U-phase, V-phase, and W-phase coils 56 in the current control device.

Further, a protrusion 61 that becomes a detection target used to detect an ignition timing of the engine 10 is formed on the outer circumferential surface of the rotor 52. An electromagnetic pickup sensor 62 is attached to a position that faces a rotational path of the protrusion 61 of the inner circumferential surface of the engine cover 51. A detection signal detected by the pickup sensor 62 is output to a control device (not shown) used for engine control.

The detection signal detected by the pickup sensor 62 is also used to detect the rotational angle of the crankshaft 16 with each signal detected by the three Hall IC units 57 described above. That is, since the pickup sensor 62 can detect a specific angle of the crankshaft 16 with respect to the engine cover 51, by counting pulses of the detection signal of each of the Hall IC units 57 after the detection signal is output from the pickup sensor 62, it is possible to detect angles of a plurality of points from a starting point at a specific angle of the crankshaft 16.

Further, as shown in FIG. 1, the above-described three Hall IC units 57 each detecting the change of magnetic flux are provided at a frontward upper position relative to the crankshaft 16 in the engine cover 51.

As shown in FIG. 3, an outside air introduction hole 69 is formed on a substantially central part of the bottom wall 51a of the engine cover 51 so as to face the end portion in the axis direction of the crankshaft 16. An air guiding duct 59 used to introduce a traveling wind through the outside air guiding hole 69 into the engine cover 51 when the vehicle is traveling is attached on the vehicle outside of the bottom wall 51a. The front end portion that introduces the outside air of the air guiding duct 59 directs toward the front of the vehicle body. Further, a discharge port 60 used to discharge the traveling wind introduced into the engine cover 51 is provided on the rearward wall of the engine cover 51 relative to the crankshaft 16.

On the other hand, a partition wall 63 having a circular plate shape that separates the crank chamber 17a from an inner space of the engine cover 51 is attached to the opening 17b of the crankcase 17 through which the end portion of the crankshaft 16 protrudes. In the present embodiment, the partition wall 63 is formed of a heat-resistant resin material. The outer circumferential edge portion of the partition wall 63 is fixed to the edge portion of the opening 17b of the crankcase 17 in a state where an O ring 64 as a seal member is interposed between the outer circumferential edge portion of the partition wall 63 and the edge portion of the opening 17b. Further, a penetrating hole 65 into which the end portion of the crankshaft 16 is inserted is formed on the central part of the partition wall 63. An oil seal 66 is provided in a space between the penetrating hole 65 and the outer circumferential surface of the crankshaft 16. The oil seal 66 keeps the space liquid-tight in a state where rotation of the crankshaft 16 is allowed.

A plurality of penetrating holes 70 each connecting two sides of the bottom wall 52a are provided on the bottom wall 52a of the rotor 52 of the ACG starter 50. Further, a plurality of fins 67 are provided in a protruding manner on the outer lateral surface of the bottom wall 52a of the rotor 52. The fin 67 functions as a rotary vane that introduces a cooling air through the outer peripheral area of the rotor 52 and the penetrating hole 70 when the rotor 52 rotates and that sends the cooling air toward the partition wall 63. In the present embodiment, the fins 67 provided in a protruding manner on the bottom wall 52a of the rotor 52 configure an air guiding member for forced cooling.

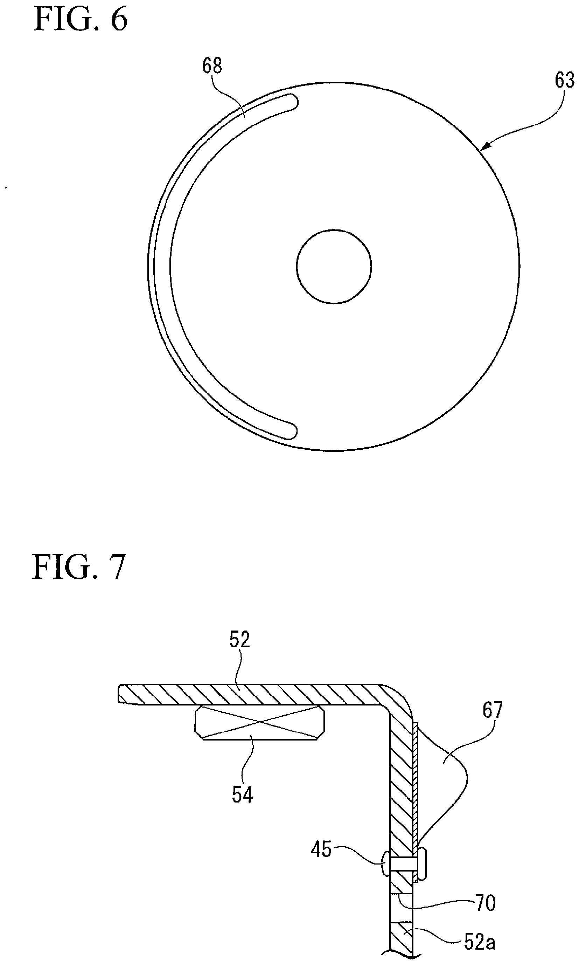

FIG. 6 is a front view of the partition wall 63.

As shown in FIG. 3 and FIG. 6, a flow adjusting vane 68 having an arc shape that adjusts the flow of the cooling air that is sent from the fin 67 of the rotor 52 is provided in a protruding manner on a surface that faces the bottom wall 52a of the rotor 52 of the partition wall 63. The flow adjusting vane 68 of the present embodiment is provided radially outwardly of the formation position of the fin 67 of the rotor 52 and mutually overlaps in an axis direction with the fin 67 of the rotor 52. Therefore, when the cooling air is blown to the front surface of the partition wall 63 from the fin 67, according to a guiding function by the flow adjusting vane 68, the cooling air is guided to the vehicle body rearward area along the front surface of the partition wall 63. In this way, the cooling air that flows along the front surface of the partition wall 63 cools the partition wall 63 and the circumferential area of the partition wall 63 and then is exhausted to the outside of the engine cover 51 through the discharge port 60.

The cooling air introduced in the engine cover 51 through the air guiding duct 59 when the vehicle is traveling, as indicated by an arrow in FIG. 3, travels in a direction that is opposed to the end portion of the crankshaft 16 and reaches the bottom wall 52a of the rotor 52. Part of the cooling air flows to the partition wall 63 through the penetrating hole 70 of the bottom wall 52a of the rotor 52, and the rest of the cooling air changes direction at the bottom wall 52a of the rotor 52 and travels to the circumferential area of the Hall IC unit 57 on the opening side of the rotor 52. The traveling wind that travels to the partition wall 63 through the penetrating hole 70 gains an air blowing effect by the fin 67 and cools the partition wall 63 and the circumferential area of the partition wall 63 as described above. On the other hand, the cooling air that travels to the circumferential area of the Hall IC unit 57 cools the Hall IC unit 57 and then flows around to the outer circumference of the rotor 52. Part of the cooling air is discharged to the outside directly through the discharge port 60. The rest of the cooling air gains suction and air blowing effects of the fin 67 and is blown to the front surface of the partition wall 63.

Note that, as a second embodiment shown in FIG. 7, the fin 67 as the air guiding member provided on the bottom wall 52a of the rotor 52 may be formed of a metal plate as a separate body of the rotor 52 and may be fixed to the bottom wall 52a of the rotor 52 by a rivet 45 or the like.

As described above, in the engine unit 2 of the present embodiment, the partition wall 63 is attached to the opening 17b of the crankcase 17 through which the end portion of the crankshaft 16 protrudes, and the crank chamber 17a and the inner space of the engine cover 51 are liquid tightly sealed. Therefore, it is possible to prevent lubrication oil that flows in the crankcase 17 from flowing into the engine cover 51. Accordingly, lubrication oil that becomes a high-temperature when the engine 10 is driven does not flow around into the circumferential area of the Hall IC unit 57.

Further, in the engine unit 2, the rotor 52 of the ACG starter 50 is attached to the crankshaft 16 such that the bottom wall 52a is located on the crankcase 17 side, and the stator 53 of the ACG starter 50 and the Hall IC unit 57 are attached to the inner surface of the bottom wall 51a of the engine cover 51. Therefore, the stator 53 and the Hall IC unit 57 are kept a low-temperature state by the engine cover 51 that is directly exposed to the outside air and is easily cooled.

Further, in the engine unit 2, a plurality of fins 67 each functioning as a rotary vane are provided on the bottom wall 51a of the rotor 52 that integrally rotates with the crankshaft 16. Therefore, the cooling air introduced through the outer circumferential area of the rotor 52 and the penetrating hole 70 can be blown to the partition wall 63. Therefore, it is possible to efficiently cool the partition wall 63 and the wall of the crankcase 17 of the circumferential area of the partition wall 63 by the cooling air. Accordingly, the heat on the crankcase 17 side becomes further difficult to be transmitted to the Hall IC unit 57.

Specifically, in the present embodiment, a flow adjusting vane 68 that guides the cooling air which is blown from the fin 67 of the rotor 52 to the rear of the vehicle body along the front surface of the partition wall 63 is provided in a protruding manner on the surface of the partition wall 63 that faces the bottom wall 52a of the rotor 52. Therefore, it is possible to further efficiently cool the partition wall 63 exposed to the heat of the crankcase 17 by the cooperation of the fin 67 and the flow adjusting vane 68.

Further, in the engine unit 2 of the present embodiment, part of a traveling wind introduced into the engine cover 51 through the air guiding duct 59 directly flows into the front surface of the partition wall 63 through the penetrating hole 70 of the rotor 52, and part of the rest of the traveling wind flows into the circumferential area of the Hall IC unit 57 in the opening of the rotor 52. Since the traveling wind cools the partition wall 63 and the Hall IC unit 57 and then is discharged to the outside through the discharge port 60, it is possible to further efficiently cool a region that tends to be a high temperature in the engine cover 51 by the traveling wind when the vehicle is traveling.

Note that, the traveling wind introduced into the engine cover 51 through the air guiding duct 59 also cools the pickup sensor 62 attached to the inner surface of the circumferential wall of the engine cover 51.

The engine unit 2 of the present embodiment is not one in which the Hall IC unit 57 is attached to a portion that directly faces the magnetic pole face of the permanent magnet 54 of each of the U-phase, V-phase, and W-phase magnetic poles of the stator 53. However, each of the Hall IC units 57 is provided on the lateral portion in the axis direction of the permanent magnet 54 magnetized along the radial direction of the rotor 52 such that the magnetic flux detection direction is parallel to the magnetization direction of the permanent magnet 54 (directed along the radial direction of the rotor 52). Therefore, it is possible to efficiently detect the magnetic flux change of each magnetic pole of the stator 53 associated with the movement of the permanent magnet 54. Specifically, in the present embodiment, since the Hall IC unit 57 is arranged close to the inner circumferential surface of the end edge of the rotor 52, it is possible to further efficiently detect the magnetic flux change of each magnetic pole of the stator 53.

Further, in the present embodiment, it is possible to detect the change of magnetic flux corresponding to each of the U-phase, V-phase, and W-phase by the Hall IC unit 57 described above, it is possible to detect the ignition timing of the engine 10 by the pickup sensor 62 provided on the circumferential wall of the engine cover 51 and the protrusion 61 provided in a protruding manner on the outer circumference of the rotor 52, and further, it is possible to detect the rotational angle of the crankshaft 16 based on the detection signal of each of the Hall IC units 57 and the detection signal of the pickup sensor 62. Moreover, since both of the Hall IC unit 57 and the pickup sensor 62 are not easily influenced by the heat of the crankcase 17 described above, it is possible to always maintain stable detection performances.

Note that, the rotational angle of the crankshaft 16 detected based on each of detection signals of the Hall IC units 57 and the pickup sensor 62 is used when performing a rotation control of the ACG starter 50, for example, such that the stop position (angle) of the crankshaft 16 is a position suitable for the next restart of the engine 10 when idling is stopped.

Further, since in the engine unit 2 of the present embodiment, the partition wall 63 attached to the opening 17b of the crankcase 17 is formed of a heat-resistant resin material, there is an advantage that it is possible to efficiently cut off high-temperature heat of the crankcase 17 by the partition wall 63 and that it is possible to easily form in an integrated manner an air guiding unit such as the flow adjusting vane 68 on the partition wall 63.

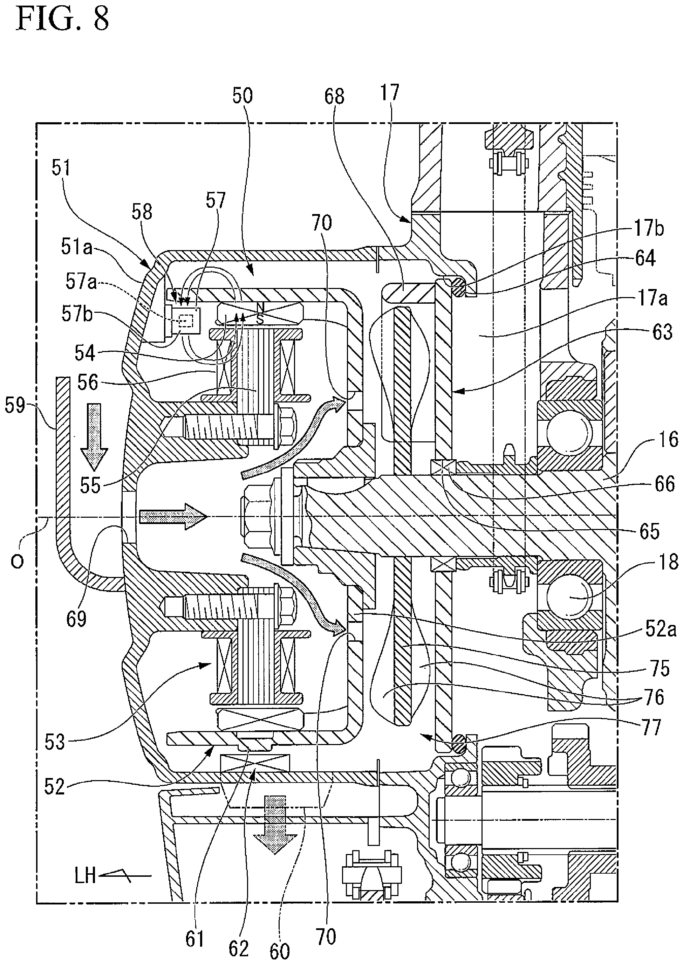

FIG. 8 is an enlarged view showing an installation part of the ACG starter 50 according to a third embodiment of the present invention.

The basic configuration of the engine unit of the present embodiment is substantially similar to that of the first embodiment; however, there is a difference that a rotary vane 77 as a separate body of the rotor 52 is integrally attached to the crankshaft 16 while in the first embodiment, the fin 67 that functions as a rotary vane is integrally provided on the bottom wall 52a of the rotor 52.

The rotary vane 77 is one in which a plurality of fins 67 is provided in a protruding manner on a support plate 75 having a circular plate shape fixed to the crankshaft 16 and is attached to the crankshaft 16 such that the rotary vane 77 is located in a space between the partition wall 63 and the bottom wall 52a of the rotor 52.

In the case of the present embodiment, the rotary vane 77 configures the air guiding member that guides a cooling air to the space between the partition wall 63 and the bottom wall 52a of the rotor 52.

Further, the flow adjusting vane 68 is provided in a protruding manner on the front surface side of the partition wall 63, similarly to the first embodiment. The flow adjusting vane 68 is arranged radially outwardly of the rotary vane 77 and is configured to overlap in the axis direction with the rotary vane 77.

The engine unit of the present embodiment can basically provide advantages substantially similar to the first embodiment. Further, it is not necessary to apply a special process on the rotor 52 and the partition wall 63, and what is required is just attaching the rotary vane 77 to the crankshaft 16. Therefore, production is easy, and parts of the existing type of vehicle are available as is. Accordingly, there is a further advantage that the production cost can be reduced.

Note that, the flow adjusting vane 68 that adjusts the flow of the cooling air sent from the rotary vane 77 may be provided on the partition wall 63, similarly to the first embodiment.

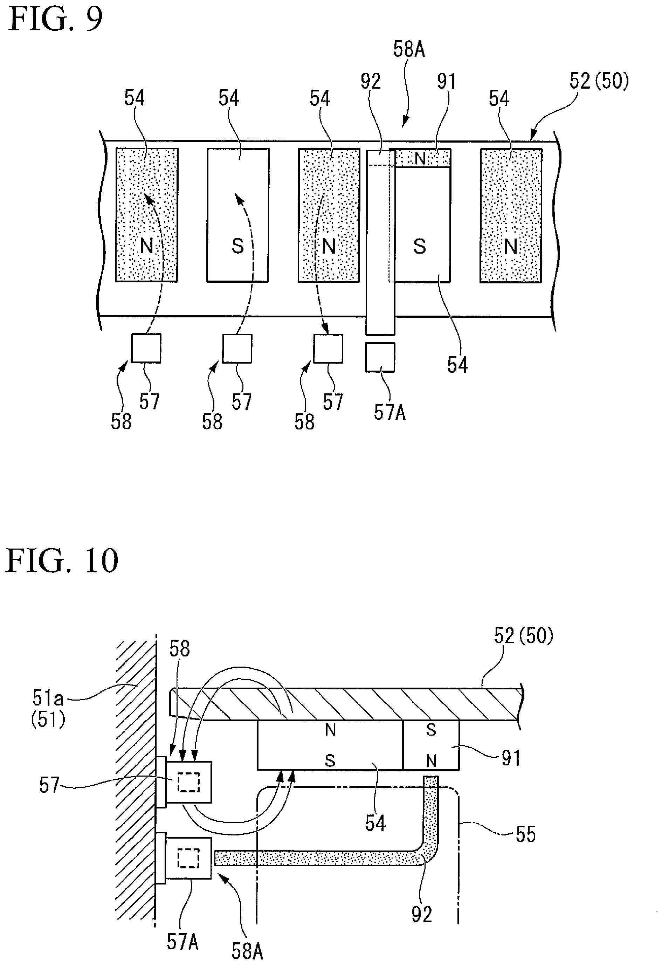

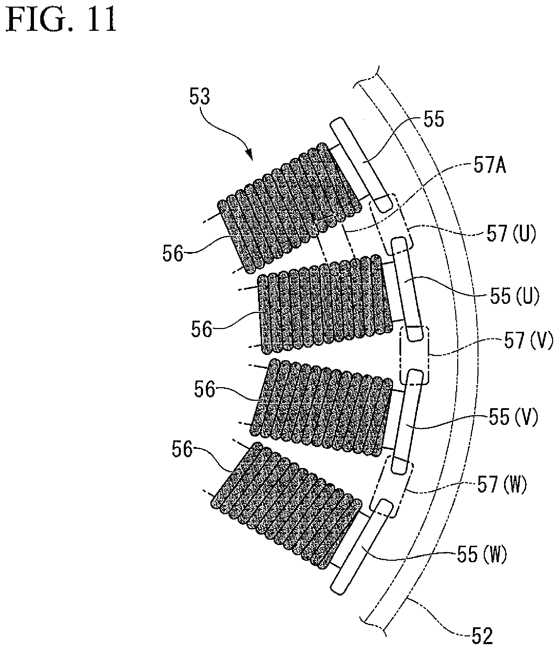

FIG. 9 is a diagram in which the inner circumferential surface of the rotor 52 is expanded and is schematically shown according to a fourth embodiment of the present invention. FIG. 10 is a schematic enlarged cross sectional view of an installation part of the ACG starter 50 corresponding to FIG. 3 of the fourth embodiment. FIG. 11 is a view in which the stator 53 is seen from a direction along the shaft center of the rotor 52.

The engine unit of the fourth embodiment does not employ the pickup sensor 62 shown in FIG. 3 and FIG. 8 in order to detect the ignition timing of the engine and is configured such that an indicator magnet 91 (permanent magnet) for the detection target is provided on part of the permanent magnet 54 of the ACG starter 50 and that the magnetic flux change of a magnet array including the indicator magnet 91 is detected by the Hall IC unit 57A. In the present embodiment, the Hall IC unit 57A and the magnet array of the permanent magnet 54 including the indicator magnet 91 configure a position detection sensor 58A that detects the rotational position of the rotor 52. Note that, in the case of the present embodiment, the permanent magnet 54 and the U-phase, V-phase, and W-phase Hall IC units 57 (hereinafter, referred to as "energization control Hall IC unit 57□) configure the position detection sensor 58, similarly to other embodiments described above.

As shown in FIG. 9, the permanent magnet 54 provided on the inner circumferential surface of the rotor 52 is arranged such that magnetized faces alternately appear along the circumferential direction, similarly to other embodiments described above. The energization control Hall IC units 57 are attached to the inner surface of the bottom wall 51a of the engine cover 51 at a lateral positon of the permanent magnet 54 and the U-phase, V-phase, and W-phase magnetic poles. In the case of the present embodiment, the Hall IC elements of the energization control Hall IC units 57 are also arranged such that the magnetic flux detection direction is directed along the radial direction of the rotor 52.

Further, the indicator magnet 91 is attached to the end portion in the axis direction of arbitrary magnet piece of the permanent magnet 54 such that a magnetic pole that is different from a magnetic pole which directs toward the rotor center of the permanent magnet 54 directs toward the rotor center (for example, such that when the magnetic pole of the permanent magnet 54 is the S-pole, the N-pole directs toward the rotor center). In the magnet array on one end side in the axis direction including the indicator magnet 91, three magnetic poles of the same pole type (in the case of the example of FIG. 9, N-pole) continues forward and rearward of the indicator magnet 91. Therefore, in the magnet array of the end portion including the indicator magnet 91, when the change of magnetic flux in which three magnetic poles of the same pole type continues while the rotor 52 rotates is detected, a specific position (angle) on the crankshaft can be determined. In the present embodiment, the specific position on the crankshaft 16 is associated with the ignition position of the engine.

An ignition timing detection Hall IC unit 57A is attached to the inner lateral surface of the bottom wall 51a of the engine cover 51, similarly to the energization control Hall IC unit 57. As shown in FIG. 10, a magnetic flux introduction member 92 such as a magnetic metal is provided at a position that faces a path of the magnetic pole face of the indicator magnet 91 with a micro gap. The magnetic flux introduction member 92 is arranged such that one end of the magnetic flux introduction member 92 faces the path of the magnetic pole face of the indicator magnet 91 and that the other end of the magnetic flux introduction member 92 faces the magnetic flux detection unit of the Hall IC unit 57A.

In the engine unit of the fourth embodiment, it is possible to detect the ignition timing of the engine by the Hall IC unit 57A and the magnet array of the end portion of the permanent magnet 54 including the indicator magnet 91, and it is possible to accurately detect the rotational angle of the crankshaft 16 by using output signals of the Hall IC unit 57A and the energization control Hall IC units 57. These functions are similar to those of the above embodiments in which a pickup sensor is used to detect the ignition timing of the engine. On the other hand, in the present embodiment, since the Hall IC units 57, 57A are gathered and arranged on the bottom wall 51a of the engine cover 51 that is easily cooled by the outside air, the cooling efficiencies of the Hall IC units 57, 57A can be enhanced, and the structure of the engine cover 51 is simplified to make the whole apparatus compact.

Further, in the case of the present embodiment, it is not necessary to process the outer circumferential wall of the rotor 52 such that a protrusion for the target used to detect the ignition timing of the engine is formed on the outer circumferential wall of the rotor 52, and therefore there is also an advantage that the production cost can be reduced.

Then, in the present embodiment, similarly to the first embodiment, it is possible to efficiently cool not only the energization control Hall IC units 57 but also the ignition timing detection Hall IC unit 57A. Accordingly, in the engine unit, since the cooling performances of the installation part of the Hall IC units 57, 57A are enhanced, it is possible to stably detect a rotational position by the Hall IC units 57, 57A even in a case where a high cooling efficiency of the engine body is not expected.

Note that, the present invention is not limited to the above embodiments, and a variety of design changes can be made without departing from the scope of the invention. For example, in the above embodiments, the partition wall 63 that blocks the opening 17b of the crankcase 17 is formed of a heat-resistant resin; however, the partition wall 63 may be formed of a metal material. In this case, the heat generated on the crankcase 17 side is further easily diffused to the outside through the partition wall 63, and it is also possible to consider cooling the engine by using the air guiding part.

### Description of Reference Symbols

2: engine unit
16: crankshaft
17: crankcase
17a: crank chamber
17b: opening
50: ACG starter (rotary electric machine)
51: engine cover
52: rotor
52a: bottom wall
53: stator
54: permanent magnet
57, 57A: Hall IC unit
57a: Hall IC element
58, 58A: position detection sensor
59: air guiding duct
60: discharge port
61: protrusion
62: pickup sensor
63: partition wall
67: fin (rotary vane, air guiding member)
68: flow adjusting vane
70: penetrating hole
77: rotary vane (air guiding member)
91: indicator magnet (permanent magnet)

## Claims

1. An engine unit sensor installation structure comprising:
a crankcase (17) including a crank chamber (17a) that houses a crankshaft (16), and an opening (17b) through which an end portion of the crankshaft (16) protrudes;
a rotary electric machine (50) including a rotor (52) having a cylindrical shape with a bottom, the rotor (52) being attached to the end portion of the crankshaft (16) protruding through the opening (17b), and a stator (53) attached to an non-rotating part close to the rotor (52);
a position detection sensor (58) configured to detect a rotational position of the rotor (52);
an engine cover (51) attached to a wall portion having the opening (17b) of the crankcase (17) and covering the end portion of the crankshaft (16) and the outside of the rotary electric machine (50);
a permanent magnet (54) in which the position detection sensor (58) is provided on the rotor (52); and
a Hall IC unit (57) configured to detect the change of magnetic flux in accordance with a rotational position of the permanent magnet (54) on the rotor (52), wherein:
a partition wall (63) that separates the crank chamber (17a) from an inner space of the engine cover (51) is provided on the opening (17b) of the crankcase (17);
the rotor (52) is attached to the end portion of the crankshaft (16) such that a bottom wall (52a) is located on the crankcase side;
the stator (53) of the rotary electric machine (50) and the Hall IC unit (57) of the position detection sensor (58) are attached to the engine cover (51); and
an air guiding member for forced cooling used to introduce a cooling air to a space between the partition wall (63) and the bottom wall (52a) of the rotor (52) is provided between the partition wall (63) and the rotor (52),
wherein
the air guiding member is a rotary vane (67, 77) provided on the bottom wall (52a) of the rotor (52),
**characterized in that**
a flow adjusting vane (68) configured to adjust a flow of a cooling air that is sent from the rotary vane (67, 77) is provided in a protruding manner on a surface that faces the bottom wall (52a) of the rotor (52) of the partition wall (63).

2. The engine unit sensor installation structure according to claim 1, wherein
The air guiding member is a rotary vane (67, 77) integrally attached to the crankshaft (16).

3. The engine unit sensor installation structure according to any one of claims 1 to 2, wherein
the Hall IC unit (57) is provided at a position facing the inside of an opening of the rotor (52) in the engine cover (51),
the engine cover (51) is provided with an air guiding duct (59) that directs frontward of a vehicle body and that introduces a traveling wind in a direction that is opposed to the end portion in an axis direction of the crankshaft (16) in the engine cover (51), and
a discharge port (60) through which the traveling wind introduced into the engine cover (51) through the air guiding duct is discharged from the rear of the crankshaft (16) to the outside of the engine cover (51), and a penetrating hole through which part of the traveling wind introduced through the air guiding duct (59) is introduced to the partition wall (63) side is provided on the bottom wall (52a) of the rotor (52).

4. The engine unit sensor installation structure according to any one of claims 1 to 3, wherein
The permanent magnet (54) is provided on the rotor (52) such that a magnetization direction is directed along a radial direction of the rotor (52), and
the Hall IC unit (57) is attached to the engine cover (51) such that a magnetic flux detection direction is directed along the radial direction of the rotor (52).

5. The engine unit sensor installation structure according to any one of claims 1 to 4, wherein
The permanent magnet (54) provided on the rotor (52) is magnetized such that different magnetic pole faces alternately appear along a circumferential direction of the rotor (52) and is a permanent magnet (54) of which magnetic flux enters into and exits from U-phase, V-phase, and wherein-phase magnetic poles of the stator (53) when functioning as the rotary electric machine (50), and
the Hall IC unit (57) includes a Hall IC element configured to detect the change of magnetic flux of the U-phase, V-phase, and W-phase magnetic poles.

6. The engine unit sensor installation structure according to claim 5, wherein
a protrusion for use in ignition timing detection of the engine is provided on an outer circumferential surface of the rotor (52), and a pickup sensor is provided at a position that faces a path of the protrusion in the engine cover (51).

7. The engine unit sensor installation structure according to any one of claims 1 to 6, wherein
the partition wall (63) is formed of a resin material.

## Patentansprüche

1. Konstruktion zur Montage eines Sensors in einer Motoreinheit, die aufweist:
ein Kurbelgehäuse (17), das eine Kurbelkammer (17a), die eine Kurbelwelle (16) aufnimmt, und eine Öffnung (17b) umfasst, durch die ein Endabschnitt der Kurbelwelle (16) vorsteht;
eine elektrische Rotationsmaschine (50), die einen Rotor (52) mit einer zylindrischen Form mit einem Boden umfasst, wobei der Rotor (52) an dem Endabschnitt der Kurbelwelle (16) befestigt ist, der durch die Öffnung (17b) vorsteht, und einen Stator (53), der an einem nicht rotierenden Teil nahe an dem Rotor (52) befestigt ist;
einen Positionserfassungssensor (58), der konfiguriert ist, um eine Drehposition des Rotors (52) zu erfassen;
eine Motorabdeckung (51), die an einem Wandabschnitt mit der Öffnung (17b) des Kurbelgehäuses (17) befestigt ist und den Endabschnitt der Kurbelwelle (16) und das Äußere der elektrischen Rotationsmaschine (50) bedeckt;
einen Permanentmagneten (54), in dem der Positionserfassungssensor (58) auf dem Rotor (52) bereitgestellt ist; und
eine Hall-IC-Einheit (57), die konfiguriert ist, um die Änderung des Magnetflusses gemäß einer Drehposition des Permanentmagneten (54) auf dem Rotor (52) zu erfassen, wobei:
eine Trennwand (63), die die Kurbelkammer (17a) von einem Innenraum der Motorabdeckung (51) trennt, in der Öffnung (17b) des Kurbelgehäuses (17) bereitgestellt ist;
der Rotor (52) an dem Endabschnitt der Kurbelwelle (16) befestigt ist, so dass eine Bodenwand d(52a) auf der Kurbelgehäuseseite angeordnet ist;
der Stator (53) der elektrischen Rotationsmaschine (50) und die Hall-IC-Einheit (57) des Positionserfassungssensors (58) an der Motorabdeckung (51) befestigt sind; und ein Luftführungselement zum Zwangskühlen verwendet wird, um eine Kühlluft zu einem Raum zwischen der Trennwand (633) und dem Rotor (52) einzuleiten,
wobei
das Luftführungselement ein Drehflügel (67, 77) ist, der auf der Bodenwand (52a) des Rotors (52) bereitgestellt ist,
**dadurch gekennzeichnet, dass**
ein Strömungseinstellflügel (68), der konfiguriert ist, um eine Strömung einer Kühlluft, die von dem Drehflügel (67, 77) befördert wird, einzustellen, in einer vorstehenden Weise auf einer Oberfläche bereitgestellt ist, die der Bodenwand (52a) des Rotors (52) der Trennwand (63) zugewandt ist.

2. Konstruktion zur Montage eines Sensors in einer Motoreinheit nach Anspruch 1, wobei
das Luftführungselement ein Drehflügel (67, 77) ist, der integral an der Kurbelwelle (16) befestigt ist.

3. Konstruktion zur Montage eines Sensors in einer Motoreinheit nach einem der Ansprüche 1 bis 2, wobei
die Hall-IC-Einheit (57) an einer Position bereitgestellt ist, die dem Inneren einer Öffnung des Rotors (52) in der Motorabdeckung (51) zugewandt ist,
die Motorabdeckung (51) mit einem Luftführungskanal (59) versehen ist, der in eine Vorwärtsrichtung einer Fahrzeugkarosserie zeigt und einen Fahrtwind in einer Richtung einleitet, die in einer Achsenrichtung der Kurbelwelle (16) in der Motorabdeckung (51) entgegengesetzt zu dem Endabschnitt ist, und
eine Abgabeöffnung (60), durch die der Fahrtwind, der durch den Luftführungskanal in die Motorabdeckung (51) eingeleitet wird, von der Rückseite der Kurbelwelle (16) nach außerhalb der Motorabdeckung (51) abgegeben wird, und ein durchdringendes Loch, durch das ein Teil des Fahrtwinds, der durch den Luftführungskanal (59) eingeleitet wird, zu der Seite der Trennwand (63) eingeleitet wird, auf der Bodenwand (52a) des Rotors (52) bereitgestellt ist.

4. Konstruktion zur Montage eines Sensors in einer Motoreinheit nach einem der Ansprüche 1 bis 3, wobei
der Permanentmagnet (54) auf dem Rotor (52) derart bereitgestellt ist, dass eine Magnetisierungsrichtung entlang einer Radialrichtung des Rotors (52) gerichtet ist, und
die Hall-IC-Einheit (57) an der Motorabdeckung (51) befestigt ist, so dass eine Magnetflusserfassungsrichtung entlang der Radialrichtung des Rotors (52) ausgerichtet ist.

5. Konstruktion zur Montage eines Sensors in einer Motoreinheit nach einem der Ansprüche 1 bis 4, wobei
der auf dem Rotor (52) bereitgestellte Permanentmagnet (54) derart magnetisiert wird, dass verschiedene Magnetpolflächen abwechselnd entlang einer Umfangsrichtung des Rotors (52) erscheinen, und ein Permanentmagnet ist, dessen Magnetfluss in U-Phasen-, V-Phasen- und W-Phasen-Magnetpole des Stators (53) einritt und daraus austritt, wenn er als die elektrische Rotationsmaschine (50) dient, und
die Hall-IC-Einheit (57) ein Hall-IC-Element umfasst, das konfiguriert ist, um die Änderung des Magnetflusses der U-Phase, der V-Phasen- und der W-Phasen-Magnetpole zu erfassen.

6. Konstruktion zur Montage eines Sensors in einer Motoreinheit nach Anspruch 5, wobei
ein Vorsprung für die Verwendung zur Zündzeiterfassung des Motors auf einer Außenumfangsoberfläche des Rotors (52) bereitgestellt ist, und ein Aufnehmer an einer Position bereitgestellt ist, die einem Weg des Vorsprungs in der Motorabdeckung (51) entspricht.

7. Konstruktion zur Montage eines Sensors in einer Motoreinheit nach einem der Ansprüche 1 bis 6, wobei
die Trennwand (63) aus einem Harzmaterial ausgebildet ist.

## Revendications

1. Structure d'installation de capteur de groupe moteur comprenant :
un carter (17) comportant une chambre de manivelle (17a) qui loge un vilebrequin (16), et une ouverture (17b) à travers laquelle une portion d'extrémité du vilebrequin (16) fait saillie ;
une machine électrique rotative (50) comportant un rotor (52) ayant une forme cylindrique avec un fond, le rotor (52) étant attaché à la portion d'extrémité du vilebrequin (16) faisant saillie à travers l'ouverture (17b), et un stator (53) attaché à une partie non rotative près du rotor (52) ;
un capteur de détection de position (58) configuré pour détecter une position de rotation du rotor (52) ;
un couvercle de moteur (51) attaché à une portion de paroi dotée de l'ouverture (17b) du carter (17) et couvrant la portion d'extrémité du vilebrequin (16) et l'extérieur de la machine électrique rotative (50) ;
un aimant permanent (54) dans lequel le capteur de détection de position (58) est prévu sur le rotor (52) ; et
une unité de circuit intégré à effet Hall (57) configurée pour détecter le changement de flux magnétique selon une position de rotation de l'aimant permanent (54) sur le rotor (52), dans laquelle :
une paroi de séparation (63) qui sépare la chambre de manivelle (17a) d'un espace interne du couvercle de moteur (51) est prévue sur l'ouverture (17b) du carter (17) ;
le rotor (52) est attaché à la portion d'extrémité du vilebrequin (16) de sorte qu'une paroi de fond (52a) soit située sur le côté carter ;
le stator (53) de la machine électrique rotative (50) et l'unité de circuit intégré à effet Hall (57) du capteur de détection de position (58) sont attachés au couvercle de moteur (51) ; et
un organe de guidage d'air pour un refroidissement forcé utilisé pour introduire un air de refroidissement dans un espace entre la paroi de séparation (63) et la paroi de fond (52a) du rotor (52) est prévu entre la paroi de séparation (63) et le rotor (52),
dans laquelle
l'organe de guidage d'air est une palette rotative (67, 77) prévue sur la paroi de fond (52a) du rotor (52),
**caractérisée en ce que**
une vanne de réglage d'écoulement (68) configurée pour régler un écoulement d'un air de refroidissement qui est envoyé depuis la palette rotative (67, 77) est prévue de manière saillante sur une surface qui fait face à la paroi de fond (52a) du rotor (52) de la paroi de séparation (63).

2. Structure d'installation de capteur de groupe moteur selon la revendication 1, dans laquelle
l'organe de guidage d'air est une palette rotative (67, 77) attachée d'une seule pièce au vilebrequin (16).

3. Structure d'installation de capteur de groupe moteur selon l'une quelconque des revendications 1 et 2, dans laquelle
l'unité de circuit intégré à effet Hall (57) est prévue à une position faisant face à l'intérieur d'une ouverture du rotor (52) dans le couvercle de moteur (51),
le couvercle de moteur (51) est pourvu d'une conduite de guidage d'air (59) qui dirige vers l'avant d'une carrosserie de véhicule et qui introduit un vent de déplacement dans une direction qui est opposée à la portion d'extrémité dans une direction d'axe du vilebrequin (16) dans le couvercle de moteur (51), et
une lumière de refoulement (60) à travers laquelle le vent de déplacement introduit dans le couvercle de moteur (51) à travers la conduite de guidage d'air est refoulé depuis l'arrière du vilebrequin (16) vers l'extérieur du couvercle de moteur (51), et un trou de pénétration à travers lequel une partie du vent de déplacement introduit à travers la conduite de guidage d'air (59) est introduite dans le côté de paroi de séparation (63) est prévu sur la paroi de fond (52a) du rotor (52).

4. Structure d'installation de capteur de groupe moteur selon l'une quelconque des revendications 1 à 3, dans laquelle
l'aimant permanent (54) est prévu sur le rotor (52) de sorte qu'une direction d'aimantation soit dirigée le long d'une direction radiale du rotor (52), et
l'unité de circuit intégré à effet Hall (57) est attachée au couvercle de moteur (51) de sorte qu'une direction de détection de flux magnétique soit dirigée le long de la direction radiale du rotor (52).

5. Structure d'installation de capteur de groupe moteur selon l'une quelconque des revendications 1 à 4, dans laquelle
l'aimant permanent (54) prévu sur le rotor (52) est aimanté de sorte que des faces de pôle magnétique différentes apparaissent en alternance le long d'une direction circonférentielle du rotor (52) et est un aimant permanent (54) dont un flux magnétique entre et sort depuis des pôles magnétiques de phase U, phase V et phase W du stator (53) lorsqu'il fonctionne en tant que machine électrique rotative (50), et
l'unité de circuit intégré à effet Hall (57) comporte un élément de circuit intégré à effet Hall configuré pour détecter le changement de flux magnétique des pôles magnétiques de phase U, phase V, et phase W.

6. Structure d'installation de capteur de groupe moteur selon la revendication 5, dans laquelle
une protubérance destinée à être utilisée pour la détection de calage d'allumage du moteur est prévue sur une surface circonférentielle externe du rotor (52), et un capteur de reprise est prévu à une position qui fait face à un trajet de la protubérance dans le couvercle de moteur (51).

7. Structure d'installation de capteur de groupe moteur selon l'une quelconque des revendications 1 à 6, dans laquelle
la paroi de séparation (63) est composée d'un matériau de résine.
